# EUROPEAN PATENT SPECIFICATION

(11) **EP 1 099 739 B1**
(45) Date of publication and mention of the grant of the patent: **04.08.2004**
(21) Application number: 00124256.9
(22) Date of filing: 10.11.2000
(51) Int. Cl.: C09J 7/02

(54) **Adhesive tape**
Klebeband
Ruban adhésif

(30) Priority: 12.11.1999 JP 32234599
(43) Date of publication of application: 16.05.2001
(73) Proprietor: Sumitomo Chemical Company, Limited, Chuo-ku Osaka 541-8550 (JP)
(72) Inventor: Yamaguchi, Takanari, Tsukuba-shi, Ibaraki (JP); Furuta, Motonobu, Chiba-shi, Chiba (JP)
(74) Representative: VOSSIUS & PARTNER

(56) References cited:
- WO-A-98/15975
- PATENT ABSTRACTS OF JAPAN vol. 014, no. 583 (M-1064), 26 December 1990 (1990-12-26) -& JP 02 253951 A (DAICEL CHEM IND LTD), 12 October 1990 (1990-10-12)

## Description

The present invention relates to an adhesive tape containing a liquid crystal polymer as the supporting base material.

In recent years, heat resistant adhesive tape is used as a masking tape which endures 120 °C - 180 °C, especially used for protection of non-painting section in high temperature baking paint. Moreover, it is expected to be used as a protection tape for mechanism elements of a motor or an engine room, or as a high temperature moisture proof tape which can shield a metal surface from water vapor at a high temperature. It is also expected to be used as a solder resistant adhesive tape to fix some parts during solder treatment. However, heat resistance of conventional thermoplastic resins is not satisfactory, and an adhesive tape comprising a film having excellent heat resistance and also moisture proof property as the supporting base material, has been strongly demanded from the market.

Unlike crystalline polyesters such as polyethylene terephthalate or polybutylene terephthalate, a liquid crystal polymer which shows optical anisotropy in molten state such as a liquid crystal polyester, does not cause entanglement even in a molten state due to rigidity of the molecule, and shows a behavior that the molecular chains are oriented remarkably in the direction of flow by low shearing. Therefore, the dependence of melt viscosity on both temperature and shear rate is remarkably large. For this specific behavior, the melt flowability is extremely excellent, and a thin injection molded article having about 0.2-0.5mm thickness can be obtained easily, and moreover, the molded article has an advantage of high heat resistance, high strength, and high rigidity. However, there is a fault that anisotropy is very large and molding of film and bottle is very difficult. And, there has been also a problem that a liquid crystal polyester is generally expensive.

A liquid crystal polyester is a polyester having a characteristic that the molecules are oriented by strong interaction among the molecules in molten state. Due to the strong interaction among the molecules of liquid crystal polyester, and the molecular orientation, in addition to the well known performances about liquid crystal polyester, such as high strength, high elastic modulus and high heat resistance, it has been expected as a film material having functions, such as gas barrier property to water vapor.

In view of heat resistance, an adhesive tape comprising a polyimide film as the supporting base material has been known. However, having imide groups, it is comparatively high hygroscopic and also very expensive, thus the use is restricted. Moreover, for example, JP-A-9-239301 describes about polyethylene terephthalate (PET) film and nylon film, but heat resistance and moisture proof property are sometimes insufficient.

EP-A-0 959 498 discloses an adhesive having a storage elastic modulus at 25°C of from 10 to 2,000 MPa and a storage elastic modulus at 260°C of from 3 to 50 MPa, and also a double-sided adhesive film, a semiconductor device and a semiconductor chip mounting substrate which make use of the adhesive, and their production process.

An object of the present invention is to provide an adhesive tape maintaining excellent heat resistance and moisture proof property, as well as being less expensive.

This object has been achieved by an adhesive tape containing a supporting base material and an adhesive, wherein the supporting base material is a film comprising a liquid crystal polymer which shows optical anisotropy in molten state, wherein the water vapor permeability of said film is below 1.0 g/m²·24hr.

In addition, in the present invention, the adhesive tape means a tape comprising a supporting base material and an adhesive, as well as means those such as an adhesive sheet or an adhesive film which called differently according to its forms.

As a liquid crystal polymer which shows optical anisotropy in molten state used in the present invention, for example, polyesters of wholly aromatic type or partially aromatic type, polyester imides, or polyester amides, and resin compositions comprising such polyesters, are exemplified. Among them, liquid crystal polyesters are suitable, and wholly aromatic liquid crystal polyesters are more suitable.

The liquid crystal polyester used in the present invention is a polyester called "thermotropic liquid crystal polymer".

More specifically, examples thereof include wholly aromatic polyesters, such as:
(1) those comprising a combination of an aromatic dicarboxylic acid, an aromatic diol, and an aromatic hydroxycarboxyic acid;
(2) those comprising a combination of different kinds of aromatic hydroxycarboxylic acids;
(3) those comprising a combination of an aromatic dicarboxylic acid and a nuclear-substituted diol; and
(4) those obtainable by the reaction of a polyester such as polyethylene terephthalate with an aromatic hydroxycarboxylic acid;
and preferably those which form an anisotropic molten product at a temperature of 400°C or lower. Further, in place of the aromatic dicarboxylic acid, the aromatic diol, or the aromatic hydroxycarboxylic acid, ester derivatives thereof can be used.

Examples of repeating units of the liquid crystal polyester include the following (1) a repeating unit derived from aromatic dicarboxylic acid, and (2) a repeating unit derived from aromatic diol, without being limited thereto.

(1) Repeating unit derived from aromatic dicarboxylic acid :

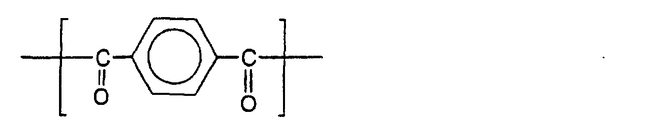

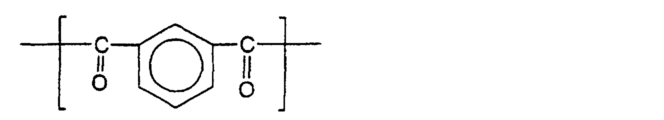

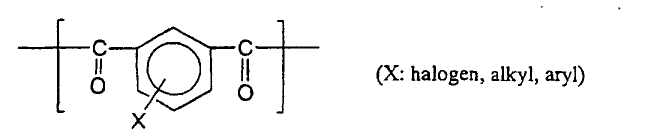

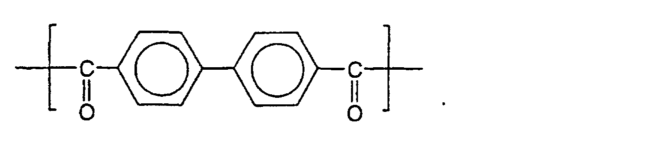

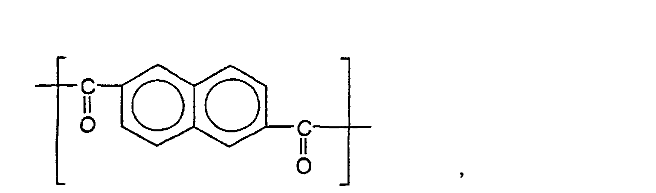

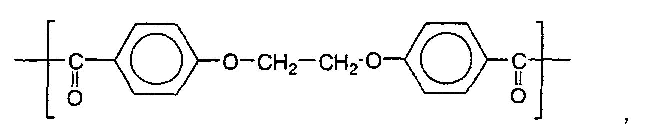

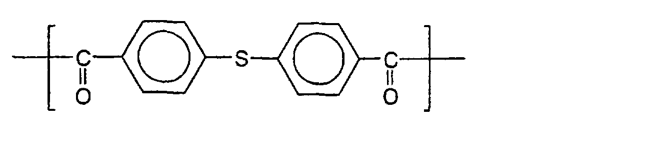

Repeating unit derived from an aromatic diol:

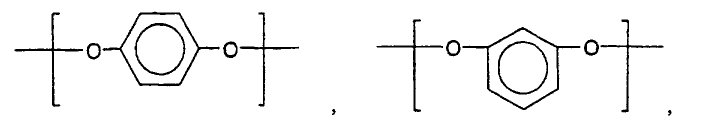

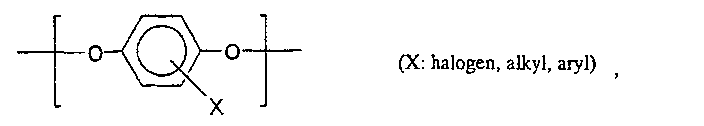

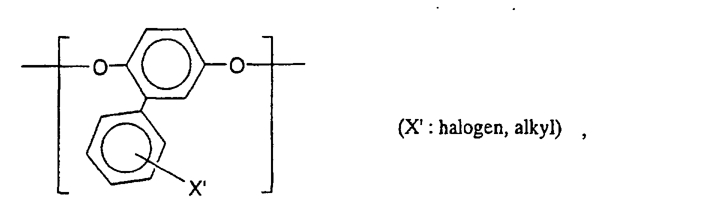

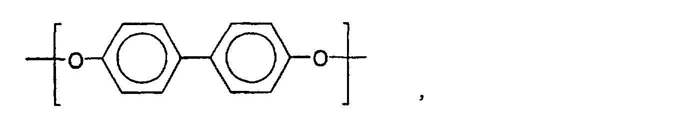

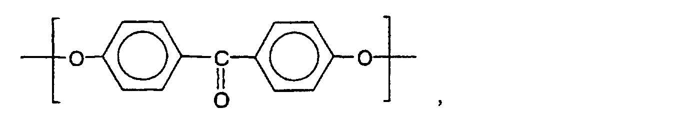

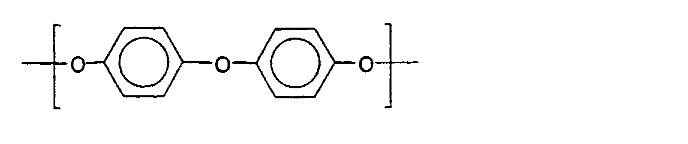

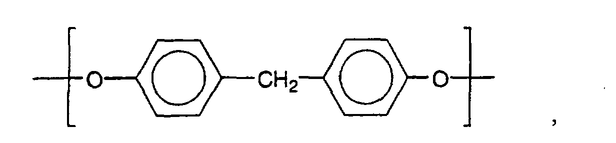

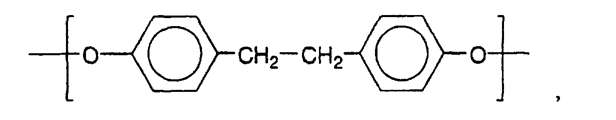

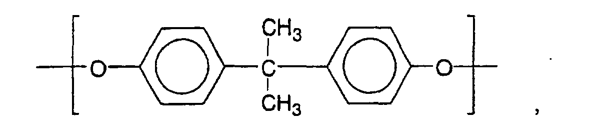

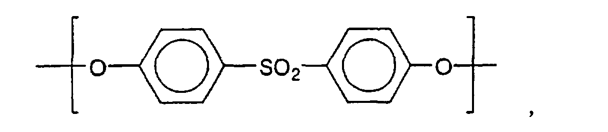

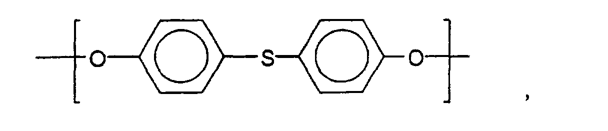

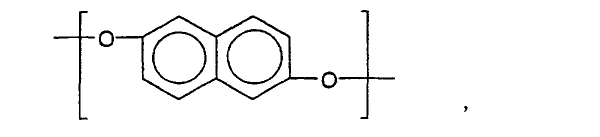

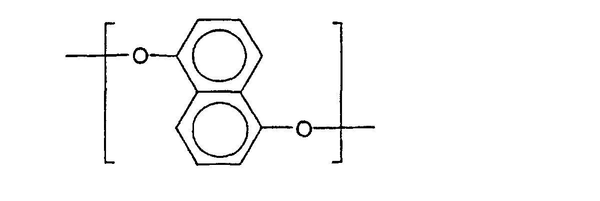

Repeating unit derived from an aromatic hydroxycarboxylic acid:

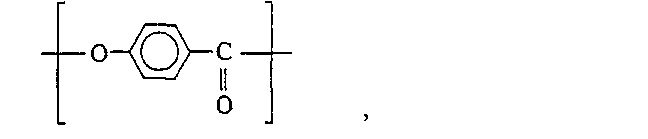

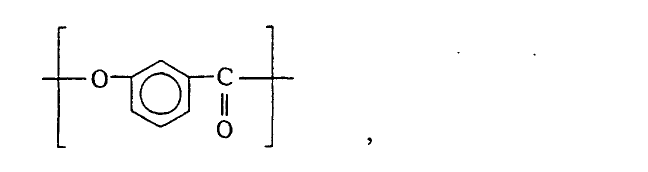

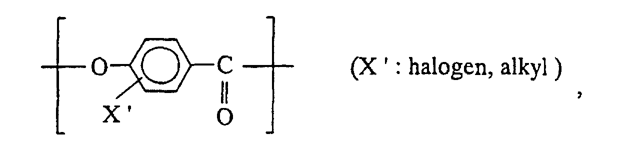

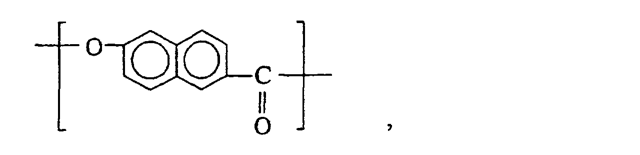

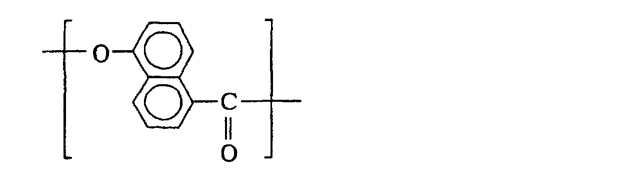

Liquid crystal polyesters including a repeating unit: 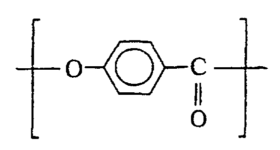 are particularly preferable in heat resistance, mechanical properties, and processability, and those including at least 30 mole % of the repeating unit are further preferable. Specifically, combinations of the repeating units shown as the following (I) - (VI) are suitable. Moreover, the wholly aromatic polyesters other than (IV) is still suitable in view of moisture proof.

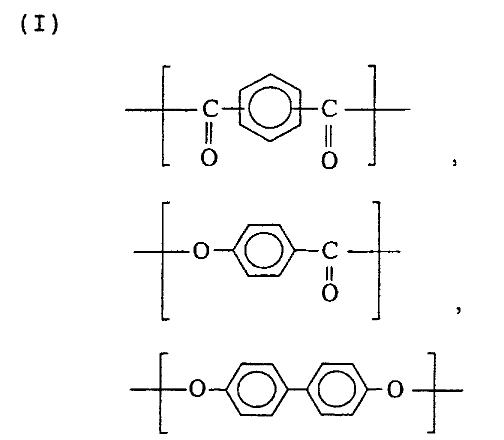

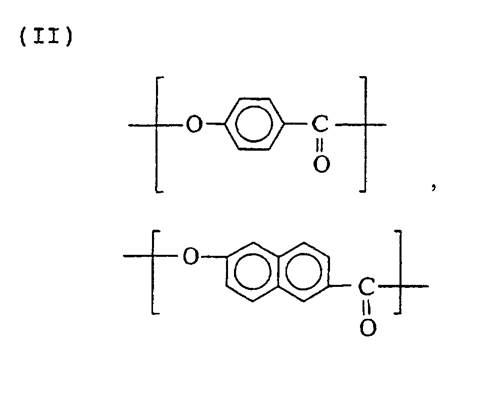

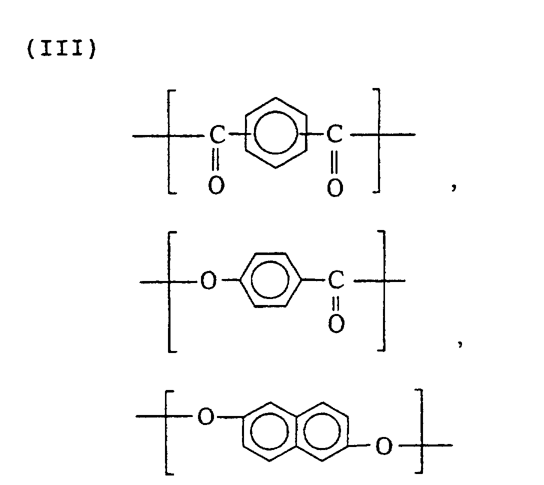

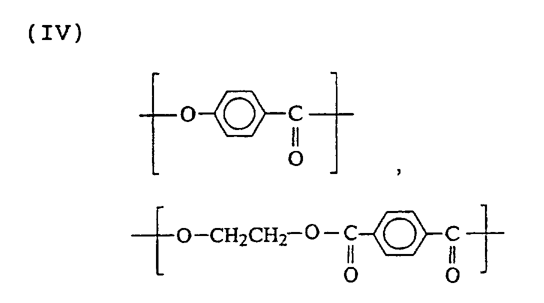

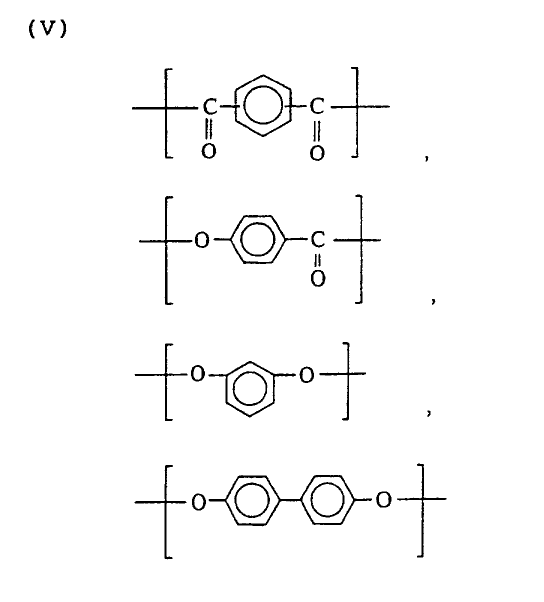

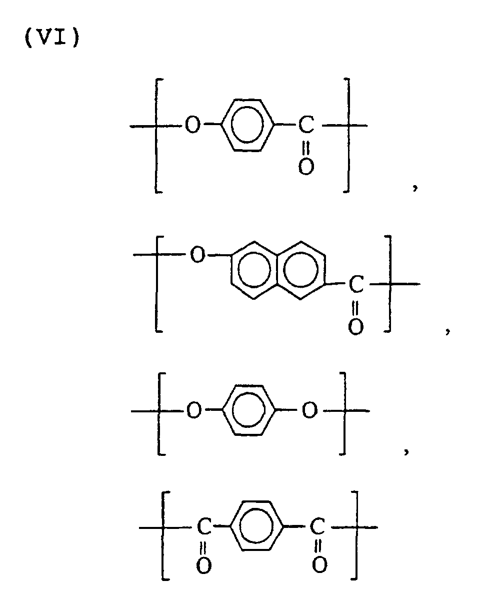

Production method of the above liquid crystal polyesters (I) to (VI) are disclosed in JP-B-47-47870, JP-B- 63-3888, JP-B-63-3891, JP-B- 56-18016, and JP-A-2-51523. Among these, combinations represented by (I), (II), and (IV) are preferable, and the combinations (I) and (II) are more preferable.

In the present invention, a liquid crystal polyester comprising: 30-80 % by mole of repeating unit (a'); 0-10 % by mole of repeating unit (b'); 10-25 % by mole of repeating unit (c'); and 10-35 % by mole of repeating unit (d'); is preferably used for the field where high heat resistance is required. 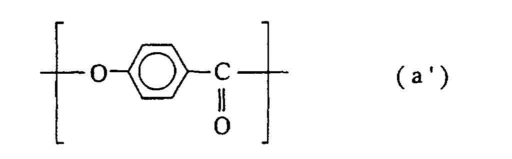 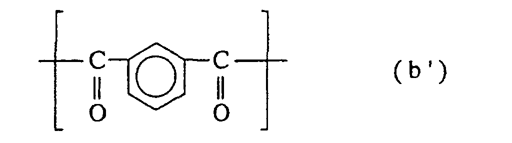 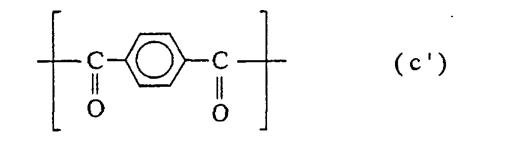 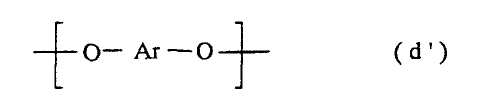 In the formula, Ar is a divalent aromatic group.

In the adhesive tape of the present invention, from standpoints such as an environmental problem, in the field required for easy abandonment, such as incineration after use, a liquid crystal polyester constituted with the combination of elements of only carbon, hydrogen and oxygen is used preferably, among the suitable combinations required for each fields exemplified so far.

In the present invention, as the liquid crystal polymer, a liquid crystal polyester or a resin composition comprising a liquid crystal polyester as one component can be used suitably. In view of processability and performances of the obtainable film, in the present invention, it is preferable to use a liquid crystal polyester resin composition comprising (A) a liquid crystal polyester as continuous phase, and (B) a copolymer having a functional group reactive with liquid crystal polyester as dispersed phase.

The component (B) used for the above liquid crystal polyester resin composition is a copolymer having a functional group reactive with liquid crystal polyester. As such a functional group reactive with liquid crystal polyester, any functional groups can be used as long as it has reactivity with a liquid crystal polyester. Concretely, exemplified are an oxazolyl group, an epoxy group, or an amino group, and preferably an epoxy group. The epoxy group and the other exemplified groups may exist as a part of other functional groups, and as such an example, a glycidyl group is exemplified.

In the copolymer (B), as a method of introducing such a functional group into a copolymer, it is not limited especially and can be carry out by the well-known methods. For example, It is possible to introduce a monomer having this functional group by copolymerization in a preparation stage of the copolymer. It is also possible to conduct a graft polymerization of a monomer having this functional group to a copolymer.

As the monomer having a functional group reactive with liquid crystal polyester, among them, as the monomer containing a glycidyl group, unsaturated glycidyl carboxylates and/or unsaturated glycidyl ethers are used preferably.

Specifically, as unsaturated glycidyl carboxylate, exemplified are: glycidyl acrylate, glycidyl methacrylate, itaconic acid diglycidyl ester, butene tri carboxylic acid triglycidyl ester, or p-styrene glycidyl carboxylate. As unsaturated glycidyl ether, exemplified are: vinyl glycidyl ether, allyl glycidyl ether, 2-methyl allyl glycidyl ether, methacryl glycidyl ether, or styrene-p-glycidyl ether.

Unsaturated glycidyl carboxylate is a compound suitably represented by the general formula 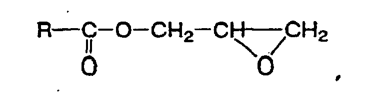 (in the formula, R is a hydrocarbon group of 2-13 carbons having an ethylenically unsaturated bond), and unsaturated glycidyl ether is a compound suitably represented by the general formula 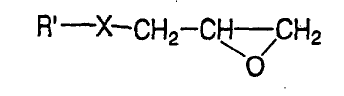 in the formula, R' is a hydrocarbon group of 2-18 carbons having an ethylenically unsaturated bond, and X is -CH₂-O- or

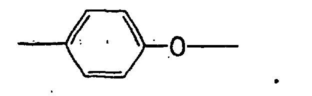

The above copolymer (B) having a functional group reactive with liquid crystal polyester, is suitably a copolymer having 0.1 to 30% by weight of a unsaturated glycidyl carboxylate unit and/or a unsaturated glycidyl ether unit.

Moreover, the above copolymer (B) having a functional group reactive with liquid crystal polyester may be a thermoplastic resin as well as a rubber, and it may be the mixture of a thermoplastic resin and a rubber. Preferable is a rubber which can afford excellent heat stability and flexibility to a molded article, such as a film or a sheet obtained using the liquid crystal polyester resin composition.

Further suitably, the above copolymer (B) having a functional group reactive with liquid crystal polyester is a copolymer having a heat of fusion of crystal of less than 3J/g.

Moreover, as the copolymer (B), Mooney viscosity is suitably 3-70, more suitably 3-30, and especially suitably 4-25. Here, Mooney viscosity means the value measured using using the large rotor at 100 °C according to JIS K6300.

When it is outside the above ranges, heat stability or flexibility of the composition may deteriorate and it is not preferable.

Here, the rubber corresponds to a polymeric substance having rubber elasticity at room temperature according to New Edition Polymer Dictionary (edited by Society of Polymer Science, Japan, 1988, Asakura Shoten). Concrete examples include, natural rubber, butadiene polymer, butadiene-styrene copolymer (random copolymer, block copolymer (including SEBS rubber, or SBS rubber), graft copolymer), or hydrogenated products thereof, isoprene polymer, chloro butadiene polymer, butadiene-acrylonitrile copolymer, isobutylene polymer, isobutylene-butadiene copolymer rubber, isobutylene-isoprene copolymer, acrylate-ethylene copolymer rubber, ethylene-propylene copolymer rubber, ethylene-butene copolymer rubber, ethylene-propylene-styrene copolymer rubber, styrene-isoprene copolymer rubber, styrene-butylene copolymer, styrene-ethylene-propylene copolymer rubber, perfluoro rubber, fluororubber, chloroprene rubber, butyl rubber, silicone rubber, ethylene-propylene-non-conjugated diene copolymer rubber, thiol rubber, vulcanized rubber, polyurethane rubber, polyether rubber (e.g., polypropylene oxide), epichlorohydrin rubber, polyester elastomer, or polyamide elastomer. Among them, acrylate-ethylene copolymer is used suitably and (meth)acrylate-ethylene copolymer rubber is still suitable. These rubber-like substances can be prepared by any methods (for example, emulsion polymerization method, solution polymerization method) and any catalyst (for example, peroxide, trialkyl aluminium, lithium halide, nickel type catalyst).

As a method of introducing such a functional group reactive with a liquid crystal polyester into a rubber, it is not limited especially and can be carry out by the well-known methods. For example, it is possible to introduce a monomer having the functional group by copolymerization in a preparation stage of the rubber. It is also possible to conduct a graft copolymerization of a monomer having the functional group to a rubber.

Concrete examples of the copolymer (B) having a functional group reactive with liquid crystal polyester, as a rubber having epoxy group, include a copolymer rubber of (meth)acrylate-ethylene-(unsaturated glycidyl carboxylate and/or unsaturated glycidyl ether).

Here, the (meth)acrylate is an ester obtained from an acrylic acid or methacrylic acid and an alcohol. As the alcohol, an alcohol having 1-8 carbons is preferable. Concrete examples of the (meth)acrylates include methyl acrylate, methyl methacrylate, n-butyl acrylate, n-butyl methacrylate, tert-butyl acrylate, tert-butyl methacrylate, 2-ethylhexyl acrylate, or 2-ethylhexyl methacrylate. The (meth)acrylates can be used alone or as a mixture of two or more therof.

In the copolymer rubber of the present invention, the (meth)acrylate unit is suitably more than 40 % by weight and less than 97 % by weight, more suitably 45 - 70 % by weight, the ethylene unit is suitably 3 % by weight or more, and less 50 % by weight, more suitably 10 - 49 % by weight, and the unsaturated glycidyl ether unit and/or unsaturated glycidyl ether unit is suitably 0.1 - 30 % by weight, more suitably 0.5 - 20 % by weight.

In case of outside the above range, heat stability and mechanical properties of the obtained molded article, such as film or sheet may become insufficient, and it is not preferable.

The copolymer rubber can be prepared by usual methods, for example, bulk polymerization, emulsion polymerization, or solution polymerization, using a free radical initiator. Typical polymerization methods are those described in JP-B-46-45085, or JP-B-61-127709, and it can be prepared under the existence of a polymerization initiator which generates a free radical, at the pressure of more than 500 kg/cm², and the temperature of 40-300 °C.

Examples of other rubbers which can be used as copolymer (B) include, an acryl rubber having a functional group reactive with liquid crystal polyester, and a block copolymer rubber of vinyl aromatic hydrocarbon compound-conjugated diene compound having a functional group reactive with liquid crystal polyester.

The acryl rubber here is suitably those having at least one monomer as a main component selected from the compound represented by the general formula (1) 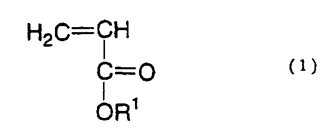 (in the formula, R1 is an alkyl group or a cyano alkyl group having 1-18 carbon atoms), the general formula (2) 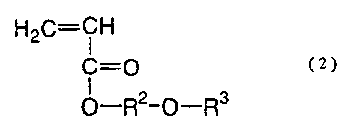 (in the formula, R2 is an alkylene group having 1-12 carbon atoms, R3 is an alkyl group having 1-12 carbon atoms), and the general formula (3) 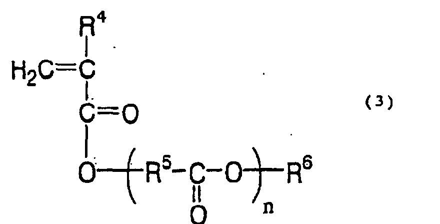 (in the formula, R4 is a hydrogen atom or methyl group, R5 is an alkylene group having 3-30 carbon atoms, R6 is an alkyl group or derivative thereof having 1-20 carbon atoms, and n is an integer of 1-20).

Concrete examples of the alkyl acrylate represented by the above general formula (1) include, for example, methyl acrylate, ethyl acrylate, propyl acrylate, butyl acrylate, pentyl acrylate, hexyl acrylate, octyl acrylate, 2-ethylhexyl acrylate, nonyl acrylate, decyl acrylate, dodecyl acrylates or cyanoethyl acrylate.

Examples of the alkoxyalkyl acrylate represented by the above general formula (2) include, for example, methoxy ethyl acrylate, ethoxy ethyl acrylate, butoxy ethyl acrylate, or ethoxy propyl acrylate. These can be used alone or in combination of two or more, as a main component of the acryl rubber.

As a composition component of the acryl rubber, an unsaturated monomer which can be copolymerized with at least one monomer selected from the compounds represented by the above general formulas (1) - (3) can be used, according to requirements.

Examples of such unsaturated monomers include styrene, α-methyl styrene, acrylonitrile, halogenated styrene, methacrylonitrile, acryl amide, methacryl amide, vinyl naphthalene, N-methylol acrylamide, vinyl acetate, vinyl chloride, vinylidene chloride, benzyl acrylate, methacrylic acid, itaconic acid, fumaric acid, or maleic acid.

The suitable component ratio of the acryl rubber having a functional group reactive with liquid crystal polyester is : 40.0 - 99.9 % by weight of one monomer selected at least from compounds represented by the above general formulas (1) - (3); 0.1 - 30.0 % by weight of unsaturated glycidyl carboxylate and/or unsaturated glycidyl ether; 0.0 - 30.0 % by weight of one monomer which can be copolymerized with the unsaturated monomers selected at least from the compound represented by the above general formula (1) - (3). If the component ratio of the acryl rubber is within the above range, heat resistance, impact resistance, and mold processing property of the composition are good, and it is preferable.

The preparation process of the acryl rubber is not especially limited, and well known polymerization method described, for example, in JP-A-59-113010, JP-A-62-64809, JP-A-3-160008, or WO 95/04764 can be used. It can be prepared under the existence of a radical initiator, by emulsion polymerization, suspension polymerization, solution polymerization, or the bulk polymerization.

Suitable examples the block copolymer rubber of vinyl aromatic hydrocarbon compound-conjugated diene compound having the above functional group reactive with liquid crystal polyester include: a rubber which is obtained by epoxidization of a block copolymer comprising (a) sequence mainly consisting of vinyl aromatic hydrocarbon compound, and (b) sequence mainly consisting of conjugated diene compound; or a rubber which is obtained by epoxidization of a hydrogenated product of said block copolymer.

The block copolymer of vinyl aromatic hydrocarbon compound-conjugated diene compound or the hydrogenated product thereof can be prepared by the well-known methods, for example, as described in JP-B-40-23798, or JP-A-59-133203.

Examples of the aromatic hydrocarbon compound include, for example, styrene, vinyltoluene, divinylbenzene, α-methyl styrene, p-methyl styrene, or vinyl naphthalene. Among them, styrene is suitable. Examples of the conjugated diene compound include, for example, butadiene, isoprene, 1,3-pentadiene, or 3-butyl-1,3-octadiene. Butadiene and isoprene are suitable.

As a rubber used as copolymer (B), copolymer rubber of (meth)acrylate-ethylene-(unsaturated glycidylcarboxylate and/or unsaturated glycidylether) is suitably used.

A rubber used as copolymer (B) is vulcanized according to requirements, and it can be used as a vulcanized rubber. Vulcanization of the above copolymer rubber of (meth)acrylate-ethylene-(unsaturated glycidylcarboxylate and/or unsaturated glycidylether) is attained by using a polyfunctional organic carboxylic acid, a polyfunctional amine compound, or an imidazole compound, without being limited thereto.

As a concrete example of a copolymer having a functional group reactive with liquid crystal polyester (B) , examples of a thermoplastic resin having epoxy group include an epoxy group containing ethylene copolymer comprising: (a) 50 - 99 % by weight of ethylene unit,(b) 0.1 - 30 % by weight of unsaturated glycidylcarboxylate unit and/or unsaturated glycidylether unit, preferably 0.5 - 20 % by weight, and (c) 0 - 50 % by weight of ethylenically unsaturated ester compound unit

Examples of the ethylenically unsaturated ester compound (c) include vinyl ester of carboxylic acid and alkyl ester of α , β - unsaturated carboxylic acid, such as: vinyl acetate, vinyl propionate, methyl acrylate, ethyl acrylate, butyl acrylate, methyl methacrylate, ethyl methacrylate, and butyl methacrylate. Vinyl acetate, methyl acrylate and ethyl acrylate are especially preferable.

Concrete examples of the epoxy group containing ethylene copolymer include, for example, a copolymer comprising ethylene unit and glycidyl methacrylate unit, a copolymer comprising ethylene unit, glycidyl methacrylate unit and methyl acrylate unit, a copolymer comprising ethylene unit, glycidyl methacrylate unit and ethyl acrylate unit, or a copolymer comprising ethylene unit, glycidyl methacrylate unit and vinyl acetate unit.

Melt index (hereinafter referred to as "MFR". JIS K6760, at 190 °C, 2.16kg load) of the epoxy group containing ethylene copolymer is suitably 0.5-100g / 10 minutes, more preferably 2-50g / 10 minutes. When the melt index is more than 100g / 10 minutes, it is not preferable in respect to mechanical physical properties of the composition. When the melt index is less than 0.5 g / 10 minutes, compatibility of component (A) with a liquid crystal polyester is inferior and it is not preferable.

The epoxy group containing ethylene copolymer has suitably a bending shear modulus of 10 - 1300 kg/cm², more suitably 20-1100kg/cm². When the bending shear modulus is outside the range, mold processing property and mechanical properties of the composition may become inadequate.

The epoxy group containing ethylene copolymer is manufactured by high pressure radical polymerization method of copolymerizing usually an unsaturated epoxy compound and ethylene, under existence of a radical generating agent, at a pressure of 500 to 4000 atm and at 100-300 °C, under existence or un-existing of a solvent and a chain transfer agent. It is manufactured also by a method of conducting molten graft copolymerization in an extruder, mixing an unsaturated epoxy compound and a radical generating agent with polyethylene.

The above liquid crystal polyester resin composition is suitably a resin composition comprising (A) a liquid crystal polyester as continuous phase, and (B) a copolymer having a functional group reactive with liquid crystal polyester as dispersed phase. When liquid crystal polyester is not continuous phase, gas barrier property, or heat resistance of a film comprising the liquid crystal polyester resin composition may fall remarkably.

In the resin composition of the copolymer and the liquid crystal polyester having such a functional group. Although details of the mechanism are unknown it is thought that a reaction occurs between components (A) and component (B) in the composition, while component (A) forms continuous phase, component (B) disperses minutely, thus the moldability of the composition is improved.

One embodiment of the above liquid crystal polyester resin composition is a resin composition comprising (A) 56.0 - 99.9 % by weight of a liquid crystal polyester, suitably 65.0 - 99.9 % by weight, further suitably 70 - 98 % by weight, (B) 44.0 - 0.1 % by weight of a copolymer having a functional group reactive with liquid crystal polyester, suitably 35.0 - 0.1 % by weight, further suitably 30 - 2 % by weight. When component (A) is less than 56.0 % by weight, the water vapor barrier property and heat resistance of the film obtained from the composition may fall. Moreover, when component (A) is more than 99.9 % by weight, the mold processing property of the composition may fall, and the price will become expensive as well.

Well-known methods can be used as the method of manufacturing such a liquid crystal polyester resin composition. For example, each component is mixed in a solution, and then evaporating the solvent, or precipitating it in the solvent. From a industrial standpoint, a method of melt-kneading each component of the above composition in molten state is suitable. For melt-kneading, currently generally used kneading machines such as an extruder having single or twin screws and various kinds of kneaders, can be used. High kneading machine having twin-screw is especially preferable. In melt-kneading, the setting temperature of the cylinder of kneading machine is suitably in the range of 200-360 °C, more suitably 230-350 °C.

In kneading, each component may be mixed uniformly by a machine such as a tumbling mixer or a Henschel mixer beforehand. A method can be used as well, where each component may be quantitatively supplied separately into a kneading machine, with omitting the previous mixing, if necessary.

To the liquid crystal polymer used for the present invention, various kinds of additives such as organic filler, antioxidant, heat stabilizer, light stabilizer, flame retardant, lubricant, antistatic agent, inorganic or organic colorant, rust preventives, crosslinking agent, foaming agent, fluorescent agent, surface smoothing agent, surface gloss improver, or release modifiers such as fluoropolymer, can be further added in the manufacturing process, or the subsequent process according to requirements.

As for the supporting base material of the present invention, a film obtained by blown film forming in which simultaneously biaxial stretching is possible is preferable. That is, the liquid crystal polyester resin composition obtained by the above method is supplied into a melt-kneading extruder equipped with a circular slit die, and melt-kneaded at a cylinder setting temperature of suitably 200-360 °C, more suitably 230-350 °C. Next, a molten resin is extruded from the circular slit of the extruder towards the upper or lower direction, to form a tubular film. This direction (longitudinal direction of film molding) is a MD direction, and the direction crossing at right angle to it in the film plane is a TD direction. The interval of the circular slit is usually 0.1-5mm, and suitably 0.5-2mm. The diameter of the circular slit is usually 20-1000mm, and suitably 50-300mm.

In blow molding (film molding), blow up ratio is suitably 1.5-10, and MD drawing magnification is suitably 1.5-40. When the setting conditions in blown film forming are outside the above range, a film having uniform thickness and high strength without wrinkles may become difficult to obtain.

The expanded film is cooled at the circumference thereof by air or water cooling, and wound through nip rolls.

In blown film forming, it is possible to select a condition of expanding a cylindrical molten film so as to have uniform thickness and smooth surface corresponding to the character of the composition. The thickness of the film is usually 5 - 500 µm, and suitably 10 - 200 µm.

A method other than blown film forming, the film may not be stretched biaxially and the minimum necessary strength thereof may not be attained as well.Even if biaxially stretching is conducted serially by another method, the production cost may become too expensive.

The film comprising a liquid crystal polymer which shows optical anisotropy in molten state used as the supporting base material of the present invention has a large tensile elasticity in MD direnction, as well as excellent dimensional stability. The tensile elasticity is suitably 14700 N/mm (1500 kgf/mm) or more , and more suitably 17640 N/mm (1800 kgf/mm) or more.

The continuously usable heat resistant temperature of the film is suitably 120°C or more, and more suitably 140°C or more. Here the continuously usable heat resistant temperature means the temperature at which the tensile strength at breakage in MD direction is reduced to half by processing for 40000 hours. The solder resistant temperature of the film is suitably 250 °C or more, more suitably 260 °C or more, and further suitably 280 °C or more. Here the solder resistant temperature means the upper temperature at which the film does not exhibit shrinkage and thermal degradation (with bubble cell) for 10 seconds processing in a heated solder bath.

The water absorption of the film is suitably 0.2 % or less, and more suitably 0.1 % or less. When the water absorption exceeds the range, it is necessary to treat at high temperature and long hours, before using as an adhesive tape, thus it is not preferable.

Further, the water vapor permeability of the film is 1.0 g/m^{2·}24hr^{·}latm, and more suitably 0.8 g/m^{2·}24hr^{·} latm. When the water vapor permeability is more than the above range, the adhesive property at high humidity may deteriorate.

The surface free energy of a film comprising a liquid crystal polymer which shows optical anisotropy in molten state which is the supporting base material in the present invention, is suitably 0.35 mN/cm (35 dyne/cm) or more. If it is less than above, unevenness in the application of an adhesive on the supporting base material may be observed, or when the adhesive tape is adhered on a paint board, resin, metal, or wood for a long time, the adhesive may move to adhere on the adherend, or may result the pasting remains. When the surface free energy of resultant liquid crystal polymer film is less than 0.35 mN/cm (35 dyne/cm), the surface can be treated by corona processing.

The adhesive tape of the present invention comprises a film comprising a liquid crystal polymer which shows optical anisotropy in molten state, wherein the water vapor permeability of said film is below 1.0 g/m^{2·}24hr and an adhesive, and is produced by laminating an adhesive on the film comprising the above liquid crystal polymer.

As an adhesive used for the adhesive tape of the present invention, generally known adhesives such as an acryl based type, rubber based type, or silicone based type, can be used without limitation. As the method of application, although there is especially no limitation, mainly used are: for example, an emulsion type and a solvent type for acryl based type; an emulsion type, a solvent type, a hot-melt type for rubber based type; and furthermore a solvent type for silicone based type.

As the acryl based adhesive used by the present invention, exemplified is a copolymer which comprises, as the components, a main monomer for exhibiting tackiness, a comonomer for improving cohesive force, and a monomer having a functional group for reactiving with crosslinking agents and for improving adhesiveness. Crosslinking can be also carried out by using a crosslinking agent.

Examples of the main monomer include: alkyl acrylate having 2-14 carbons, such as ethyl acrylate, n-butyl acrylate, and n-octyl acrylate; and alkyl methacrylate having 4-14 carbons, such as isobutyl methacrylate, or n-octyl methacrylate. These may be used in combination of two or more.

Examples of the comonomer for improving cohesive force include alkyl acrylate or alkyl methacrylate having 1-8 carbons such as methyl acrylate, methyl methacrylate, ethyl methacrylate, or propyl methacrylate, and also styrene, vinyl acetate, acrylonitrile, methacrylonitrile, or acryl amide. These may be used in combination of two or more. Since the liquid crystal polymer used for the supporting base material film of the present invention is excellent in solvent resistance, various additives can be freely added to the adhesive.

Furthermore, in order to improve adhesiveness and also to react with crosslinking agent, suitably used are: monocarboxylic acids, such as acrylic acid and methacrylic acid, polyvalent carboxylic acid such as maleic acid and glutamic acid, and anhydride thereof, furthermore, carboxylic acid derivatives having hydroxy groups, such as hydroxyethyl methacrylate and hydroxypropyl methacrylate. These may be used in combination of two or more.

As the crosslinking agent, generally, an epoxy resin, melamine resin, urea resin, polyisocyanate, phenol compound, amino compound, acid anhydride, or metal oxide are used. It can be selected suitably so that it may be appropriate for the monomer having the above functional group.

The silicone based adhesive used for the present invention consists of two main components, a polymer component and a resin for crosslinking. As the polymer, mainly used is a polydimethylsiloxane of high molecular weight, containing main repeating unit represented by

-SiO(CH₃)₂-

and has residual silanol group (SiOH) on the terminal of the long sequence of the polymer chain, or polydimethyldiphenyl siloxane. The resin for crosslinking has 3-dimensional silicate structure, and terminal of trimethylsiloxy group.

The silanol group of the polymer terminal and the trimethylsiloxy group at the terminal of the resin component for crosslinking are reacted appropriately, and polysiloxane having partial crosslinking can be obtained. It is thought that by partial crosslinking, long chain portions, crosslinking portions, and terminal portions cause micro phase separation to result in discontinuous phases, thus tackiness is exhibited.

In order to improve the adhesion of silicone based adhesive, a siloxane crosslinking density can also be made high, and an organic peroxide, amino silane, or metal salt of organic carboxylic acid can be used as the catalyst.

As the rubber based adhesive used for the present invention, natural rubber, styrene/butadiene latex, thermoplastic rubber, or isobutylene-isoprene rubber are used.

From the viewpoint of heat resistance, acryl based adhesives and silicone based adhesives are used preferably. Rubber based adhesives may not have sufficient heat resistance and aging resistance. Moreover, from the viewpoint of moisture proof property, silicone based adhesives are used especially preferably.

### EXAMPLES

Hereafter, the present invention is explained still in detail, but the present invention is not limited thereto.

### (1) Liquid crystal polyester as component (A)

(i) 8.3 kg (60 mol) of p-acetoxybenzoic acid, 2.49 kg (15 mol) of terephthalic acid, 0.83 kg (5 mol) of isophthalic acid and 5.45 kg (20.2 mol) of 4,4'-diacetoxydiphenyl were charged into a polymerization vessel equipped with a comb like stirring blade, the mixture was heated under nitrogen gas atmosphere with stirring and allowed to polymerize at 330°C for 1 hour. Acetic acid gas by-produced during this procedure was liquefied in a cooling tube, recovered and removed, while the mixture was polymerized under vigorous stirring. Then, the system was cooled gradually, a polymer obtained at 200°C was discharged from the system. The resulted polymer was ground with a hammer mill manufactured by Hosokawa Micron Corp. to obtain particles having a particle size of 2.5 mm or less. The particles were further treated at 280°C for 3 hours under nitrogen atmosphere in a rotary kiln to obtain a wholly aromatic polyester in the form of particles composed of repeating structural units as described below having a flow initiation temperature of 324°C. The flow temperature means a temperature (°C) at which the melt viscosity measured by a CFT-500 type flow tester (manufactured by Shimadzu Corp.) is 48,000 poise when a resin which has been melted by heating at a temperature raising rate of 4°C/min is extruded through a nozzle having an internal diameter of 1 mm and a length of 10 mm under a load of 981 N/cm² (100 kgf/cm²).
   Hereafter, this liquid crystal polyester is abbreviated as A-1. This polymer showed optical anisotropy at a temperature of 340°C or more under pressure. The repeating units of the liquid crystal polyester A-1 is as follows. 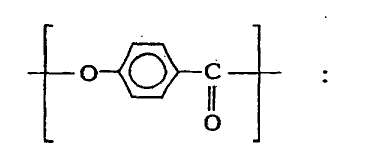 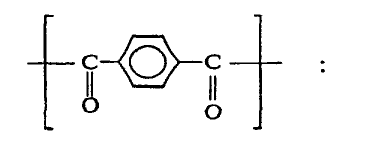 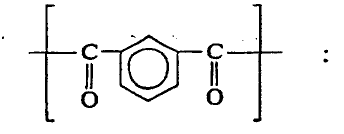 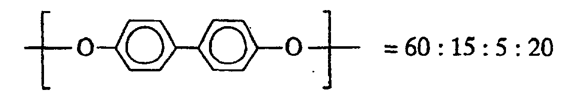
(ii) 16.6 kg (12.1 mole) of p-hydroxybenzoic acid, 8.4 kg (4.5 mole) of 6-hydroxy-2-naphthoic acid and 18.6 kg (18.2 mole) of acetic anhydride were charged into a polymerization vessel equipped with a comb like stirring blade, the mixture was heated under nitrogen gas atmosphere with stirring and allowed to polymerize at 320°C for 1 hour, further at 320°C for one hour under a reduced pressure of 266.6 Pa (2.0 torr).
   Acetic acid gas by-produced during this procedure was removed out of the system. Then, the system was cooled gradually, a polymer obtained at 180°C was discharged from the system. The resulted polymer was ground as the same manner with the above (A-1), then treated at 240°C, for 5 hours under nitrogen atmosphere in a rotary kiln to obtain a wholly aromatic polyester in the form of particles composed of repeating structural units as described below having a flow initiation temperature of 270°C.
   Hereafter, this liquid crystal polyester is abbreviated as A-2. This polymer showed optical anisotropy at a temperature of 280°C or more under pressure. The repeating units of the liquid crystal polyester A-2 is as follows.

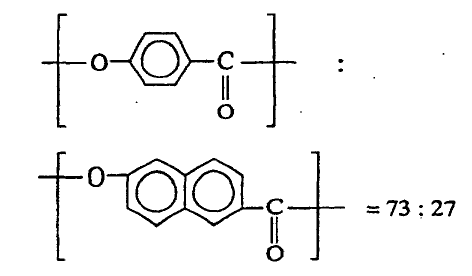

### (2) Rubber as component (B)

(i) According to the method described in Example 5 of JP-A-61-127709, a rubber having methyl acrylate / ethylene / glycidyl methacrylate =59.0/38.7/2.3 (weight ratio), and Mooney viscosity of 15 was obtained. Hereafter, this liquid crystal polyester is abbreviated as B-1. Mooney viscosity is the value measured using the large rotor at 100 °C according to JIS K6300. The heat of fusion was measured by DSC-50 (sensitivity 0.01J/g, Shimazdu Corp.) with using 10 mg of the sample at a scanning rate of 10 °C/min. , but the melting point as well as the heat of fusion were not observed

### (3) Adhesive

97 parts by weight of n-butyl acrylate, 3 parts by weight of acrylic acid, and 0.3 parts by weight of lauroyl peroxide as a polymerization initiator are dissolved in ethyl acetate, and reacted at a reflux temperature of ethyl acetate under nitrogen atmosphere for 14 hours, and an acryl copolymer was obtained. Adhesive solution in which 0.1 parts by weight of epoxy type crosslinking agents was mixed in 40% ethyl acetate solution containing the resultant acryl copolymer, was obtained. Hereafter, this solution is abbreviated as T-1.

### (4) Water vapor permeability of film

It was measured according to JIS Z0208 (cup method), in the conditions of a temperature of 35 °C, and a relative humidity of 90%. The unit is g/m^{2 ·} 24hr ^{·} latm. The water vapor permeability was not converted to the film thickness.

### (5) Tensile test of film

It was measured according to JIS C2318.

### (6) Measuring method of heat-resistant property of film Continuously usable heat resistant temperature

Film samples were put in a circulation oven maintained at 50°C, 100°C, 150°C, 200°C , 250°C, and taken our every 500 hours, from 0 hour to 2500 hours. After leaving in a thermo-hygrostat oven (23 °C, 55%RH) for one day, tensile strengths to the direction of MD were measured, and time-dependency curve of the strength were obtained. From this, the time when the strength falls half of that at 0 hour was obtained at each temperature, and next, the time (half-lifetime) was plotted corresponding with each temperature to result a curve. The temperature at which the half-lifetime become 40000 hours is defined as the continuously usable heat resistant temperature.

### Solder resistant temperature

The solder resistant temperature is evaluated through observation of the film before and after soaking in a heated solder bath. The solder resistant temperature means the upper temperature at which the film does not exhibit shrinkage and thermal degradation(with bubble cell) for 10 seconds processing in a heated solder bath.

### (7) Evaluation of surface free energy of supporting base material film A standard solution was coated and evaluated according to JIS K6768.

### (8) Evaluation of adhesive tape

A resultant adhesive tape was adhered on a painted steel plate, and after keeping it in a circulation oven at 120 °C for 20 minutes and cooling to a room temperature, the tape was removed off. When remainings and damaged traces of the adhesive on the painted steel plate were not observed, the result was shown as "excellent" , and when observed, the result was shown as "not good".

### Example 1

With the compounding ratio of 85 % by weight of A-2 and 15% by weight of B-1, melt-kneading was conducted with using a TEX-30 type twin-screw extruder made by Japan Steel Works, Ltd., at a cylinder setting temperature of 305 °C, and screw speed of 250rpm, and a composition comprising A-2 as a continuous phase and B-1 as a dispersed phase was obtained. The composition pellet showed optical anisotropy above 280 °C under pressure. The composition may be referred to as S-1, sometimes.

S-1 was melt extruded using a 60mm Φ single screw extruder equipped with a circular die at a cylinder setting temperature of 350 °C, and screw speed of 60rpm, and the molten resin was extruded upwards from a circular die having a diameter of 50mm, a lip interval of 1.0mm, and a die setting temperature of 348 °C. The resultant tubular film was expanded by introducing pressurized dry air into the hollow portion thereof, then, after cooling, it was passed through a nip roll, and a film was obtained. The blow up ratio was 4 and the draw down ratio was 10, and the measured average thickness of the film was 26 µm. The water vapor permeability of the film was 0.2 (g/m^{2·}24h^{·}latm), the tensile elasticity of MD direction was 29430 N/mm (3000 kgf/mm), and the elongation at breakage was less than 2 %.

The continuously usable heat resistant temperature was 147 °C. The solder resistant temperature was 252°C. And the surface free energy of the film was 0.4 mN/cm (40 dyne/cm). This film may be referred to as F-1, sometimes.

By coating T-1 on F-1, and drying it at 60°C for 2 hours in an explosion-prevention type circular oven, and an adhesive tape TP-1 was obtained. TP-1 was adhered on a painted steel plate, and put in a circulation oven at 120 °C for 20 minutes. After cooling it to a room temperature, the tape was removed off. The remaining of an adhesive on the painted steel plate were "excellent", and the damaged traces by removing were also "excellent".

### Example 2

With the compounding ratio of 80 % by weight of A-1 and 20 % by weight of B-1, melt-kneading was conducted with using a TEX-30 type twin-screw extruder made by Japan Steel Works, Ltd., at a cylinder setting temperature of 350 °C, and screw speed of 250rpm, and a composition comprising A-1 as a continuous phase and B-1 as a dispersed phase was obtained. The composition pellet showed optical anisotropy above 340 °C under pressure. The composition may be referred to as D-2, sometimes. D-2 was melt extruded using a 60mm Φ single screw extruder equipped with a circular die at a cylinder setting temperature of 350 °C, and screw speed of 60rpm, and the molten resin was extruded upwards from a circular die having a diameter of 50mm, a lip interval of 1.0mm, and a die setting temperature of 348 °C. The resultant tubular film was expanded by introducing pressurized dry air into the hollow portion thereof, then, after cooling, it was passed through a nip roll, and a film was obtained. The blow up ratio was 4.0 and the draw down ratio was 10, and the measured average thickness of the film was 25 µm. The water vapor permeability of the film was 0.4 (g/m^{2·}24h^{·}latm), the tensile elasticity of MD direction was 19620 N/mm (2000 kgf/mm), and the elongation at breakage was less than 2 %.

The continuously usable heat resistant temperature was 170 °C. The solder resistant temperature was 287°C. And the surface free energy of the film was 0.4 mN/cm (40 dyne/cm). This film may be referred to as F-2, sometimes.

By coating T-1 on F-2, and drying it, an adhesive tape TP-2 was obtained as the same manner with the above. TP-2 was adhered on a painted steel plate, and put in a circulation oven at 120 °C for 20 minutes. After cooling it to a room temperature, the tape was removed off. The remaining of an adhesive on the painted steel plate were "excellent", and the damaged traces by removing were also "excellent". Moreover, the tape appearance was also "excellent".

### Comparative Example 1

The water vapor permeability of a commercial available PET film (ESPET, prepared by Toyobo Co., Ltd.) having a thickness of 25 µm was measured to be 8.4 (g/m^{2·}24h^{·}latm) and it was good. The surface free energy of this film was 0.34 mN/cm (34 dyne/cm). This film may be referred to as F-3, sometimes. By coating T-1 on F-3, and drying it, an adhesive tape TP-3 was obtained as the same manner with the above. TP-3 was adhered on a painted steel plate, and put in a circulation oven at 120 °C for 20 minutes. After cooling it to a room temperature, the tape was removed off. The remainings of an adhesive on the painted steel plate were observed, and the damaged traces by removing were also observed, so "not good"

The adhesive tape of the present invention is excellent in water vapor gas barrier property and heat resistance, and it is also cheap. Thus it is used suitably as masking tape for painting, moisture proof tape, rust inhibiting tape, or insulating tape.

## Claims

1. An adhesive tape containing a supporting base material and an adhesive, wherein the supporting base material is a film comprising a liquid crystal polymer which shows optical anisotropy in molten state, and wherein the water vapor permeability of said film is below 1.0g/m^{2·}24hr.

2. The adhesive tape according to claim 1, wherein the continuously usable heat resistant temperature of the film comprising a liquid crystal polymer which shows optical anisotropy in molten state is 120 °C or more, here the continuously usable heat resistant temperature means the temperature at which the tensile strength at breakage in MD direction falls to the half for 40000 hours processing.

3. The adhesive tape according to claim 1 or 2, wherein the solder resistant temperature of the film comprising a liquid crystal polymer which shows optical anisotropy in molten state is 250 °C or more, here the solder resistant temperature means the upper temperature at which the film does not exhibit shrinkage and thermal degradation (with bubble cell) for 10 seconds processing in a heated solder bath.

4. The adhesive tape according to any of claims 1 to 3, wherein the liquid crystal polymer which shows optical anisotropy in molten state is a wholly aromatic liquid crystal polyester.

5. The adhesive tape according to any of claims 1 to 4, wherein the surface free energy of the film comprising a liquid crystal polymer which shows optical anisotropy in molten state is more than 35 dyne/cm.

6. The adhesive tape according to any of claims 1 to 5, wherein, in the film comprising a liquid crystal polymer which shows optical anisotropy in molten state, the longitudinal direction is a MD direction of film molding, and the direction crossing at right angle to it in the film plane is a TD direction of film molding.

7. The adhesive tape according to any of claims 1 to 6, wherein the liquid crystal polymer which shows optical anisotropy in molten state is a liquid crystal polyester resin composition comprising (A) liquid crystal polyester as continuous phase, and (B) a copolymer having a functional group reactive with liquid crystal polyester as dispersed phase.

8. The adhesive tape according to claim 7, wherein the liquid crystal polymer which shows optical anisotropy in molten state is a composition obtainable by melt-kneading (A) 56.0 - 99.9 % by weight of a liquid crystal polyester and (B)44.0 - 0.1 % by weight of a copolymer having a functional group reactive with liquid crystal polyester.

9. The adhesive tape according to claim 7 or 8, wherein the functional group reactive with liquid crystal polyester is an epoxy group, an oxazolyl group or an amino group.

10. The adhesive tape according to any of claims 7 to 9, wherein the copolymer having a functional group reactive with liquid crystal polyester (B) is a copolymer which contains 0.1 to 30% by weight of an unsaturated glycidyl carboxylate unit and/or unsaturated glycidyl ether unit.

11. The adhesive tape according to any of claims 7 to 9, wherein the copolymer having a functional group reactive with liquid crystal polyester (B) is a rubber having an epoxy group.

12. The adhesive tape according to any of claims 7 to 9, wherein the copolymer having a functional group reactive with liquid crystal polyester (B) is a thermoplastic resin having an epoxy group.

13. The adhesive tape according to any of claims 7 to 12, wherein the liquid crystal polyester (A) is obtainable by reacting aromatic dicarboxylic acid, aromatic diol and aromatic hydroxycarboxylic acid.

14. The adhesive tape according to any of claims 7 to 12, wherein the liquid crystal polyester (A) is obtainable by reacting different kinds of aromatic hydroxycarboxylic acids.

15. The adhesive tape according to any of claims 1 to 14, wherein the adhesive comprises an acryl based adhesive as a main component.

16. The adhesive tape according to any of claims 1 to 14, wherein the adhesive comprises a silicone based adhesive as a main component.

17. The adhesive tape according to claim 15, wherein the acryl based adhesive is a copolymer.

18. The adhesive tape according to any of claims 1 to 17, wherein the film comprising a liquid crystal polymer which shows optical anisotropy in molten state is a film obtained by blown film forming method.

## Patentansprüche

1. Klebeband, das ein Träger-Grundmaterial und einen Klebstoff enthält, Wobei das Träger-Grundmaterial eine Folie ist, die ein Flüssigkristall-Polymer umfaßt, das in geschmolzenem Zustand optische Anisotropie aufweist, und wobei die Wasserdampfdurchlässigkeit der Folie weniger als 1,0 g/m^{2·} 24 h beträgt.

2. Klebeband nach Anspruch 1, wobei die kontinuierlich verwendbare Wärmebeständigkeitstemperatur der Folie, die ein Flüssigkristall-Polymer umfaßt, das in geschmolzenem Zustand optische Anisotropie aufweist, 120°C oder mehr beträgt, wobei hier die kontinuierlich verwendbare Wärmebeständigkeitstemperatur die Temperatur bedeutet, bei der die Reißfestigkeit in Maschinenrichtung bei 40000-stündiger Verarbeitung auf die Hälfte sinkt.

3. Klebeband nach Anspruch 1 oder 2, wobei die Lötmittelbeständigkeitstemperatur der Folie, die ein Flüssigkristall-Polymer umfaßt, das in geschmolzenem Zustand optische Anisotropie aufweist, 250°C oder mehr beträgt, wobei hier die Lötmittelbeständigkeitstemperatur die obere Temperatur bedeutet, bei der die Folie bei 10 Sekunden Bearbeitung in einem erwärmten Lötmittelbad weder schrumpft noch thermisch abgebaut (mit Blasenzelle) wird.

4. Klebeband nach einem der Ansprüche 1 bis 3, wobei das Flüssigkristall-Polymer, das in geschmolzenem Zustand optische Anisotropie aufweist, ein vollständig aromatischer Flüssigkristall-Polyester ist.

5. Klebeband nach einem der Ansprüche 1 bis 4, wobei die freie Oberflächenenergie der Folie, die ein Flüssigkristall-Polymer umfaßt, das in geschmolzenem Zustand optische Anisotropie aufweist, mehr als 35 dyn/cm beträgt.

6. Klebeband nach einem der Ansprüche 1 bis 5, wobei bei der Folie, die ein Flüssigkristall-Polymer umfaßt, das in geschmolzenem Zustand optische Anisotropie aufweist, die Längsrichtung eine Maschinenrichtung bei der Folienformgebung ist und die Richtung im rechten Winkel dazu in der Folienebene eine Querrichtung bei der Folienformgebung ist.

7. Klebeband nach einem der Ansprüche 1 bis 6, wobei das Flüssigkristall-Polymer, das in geschmolzenem Zustand optische Anisotropie aufweist, eine Flüssigkristall-Polyesterharzzusammensetzung ist, die (A) Flüssigkristall-Polyester als kontinuierliche Phase und (B) ein Copolymer mit einer mit Flüssigkristall-Polyester reaktiven funktionellen Gruppe als dispergierte Phase umfaßt.

8. Klebeband nach Anspruch 7, wobei das Flüssigkristall-Polymer, das in geschmolzenem Zustand optische Anisotropie aufweist, eine Zusammensetzung ist, die durch Schmelzkneten von (A) 56,0 bis 99,9 Gew.-% eines Flüssigkristall-Polyesters und (B) 44,0 bis 0,1 Gew.-% eines Copolymers mit einer mit Flüssigkristall-Polyester reaktiven funktionellen Gruppe erhältlich ist.

9. Klebeband nach Anspruch 7 oder 8, wobei die mit Flüssigkristall-Polyester reaktive funktionelle Gruppe eine Epoxygruppe, eine Oxazolylgruppe oder eine Aminogruppe ist.

10. Klebeband nach einem der Ansprüche 7 bis 9, wobei das Copolymer mit einer mit Flüssigkristall-Polyester reaktiven funktionellen Gruppe (B) ein Copolymer ist, das 0,1 bis 30 Gew.-% einer ungesättigten Glycidylcarboxylat-Einheit und/oder ungesättigten Glycidylether-Einheit enthält.

11. Klebeband nach einem der Ansprüche 7 bis 9, wobei das Copolymer mit einer mit Flüssigkristall-Polyester reaktiven funktionellen Gruppe (B) ein Kautschuk mit einer Epoxygruppe ist.

12. Klebeband nach einem der Ansprüche 7 bis 9, wobei das Copolymer mit einer mit Flüssigkristall-Polyester reaktiven funktionellen Gruppe (B) ein thermoplastisches Harz mit einer Epoxygruppe ist.

13. Klebeband nach einem der Ansprüche 7 bis 12, wobei der Flüssigkristall-Polyester (A) durch Umsetzen von aromatischer Dicarbonsäure, aromatischem Diol und aromatischer Hydroxycarbonsäure erhältlich ist.

14. Klebeband nach einem der Ansprüche 7 bis 12, wobei der Flüssigkristall-Polyester (A) durch Umsetzen unterschiedlicher Arten aromatischer Hydroxycarbonsäuren erhältlich ist.

15. Klebeband nach einem der Ansprüche 1 bis 14, wobei der Klebstoff einen Klebstoff auf Acrylbasis als Hauptbestandteil umfaßt.

16. Klebeband nach einem der Ansprüche 1 bis 14, wobei der Klebstoff einen Klebstoff auf Siliconbasis als Hauptbestandteil umfaßt.

17. Klebeband nach Anspruch 15, wobei der Klebstoff auf Acrylbasis ein Copolymer ist.

18. Klebeband nach einem der Ansprüche 1 bis 17, wobei die Folie, die ein Flüssigkristall-Polymer umfaßt, das in geschmolzenem Zustand optische Anisotropie aufweist, eine durch ein Blasfolien-Formgebungsverfahren erhaltene Folie ist.

## Revendications

1. Ruban adhésif contenant un matériau de base de support et un adhésif, dans lequel le matériau de base de support est un film comprenant un polymère à cristaux liquides qui montre une anisotropie optique à l'état fondu, et dans lequel la perméabilité à la vapeur d'eau dudit film se situe en dessous de 1,0 g/m²/24 h.

2. Ruban adhésif selon la revendication 1, dans lequel la température de résistance à la chaleur utilisable en continu du film comprenant un polymère à cristaux liquides qui montre une anisotropie optique à l'état fondu est 120 °C ou plus, ici la température de résistance à la chaleur utilisable en continu signifie la température à laquelle la résistance à la traction à la rupture dans la direction longitudinale diminue de moitié lors d'un traitement de 40 000 heures.

3. Ruban adhésif selon la revendication 1 ou 2, dans lequel la température de résistance à la brasure du film comprenant un polymère à cristaux liquides qui montre une anisotropie optique à l'état fondu est 250 °C ou plus, ici la température de résistance à la brasure signifie la température supérieure à laquelle le film ne montre pas de retrait ni de dégradation thermique (avec des bulles) lors d'un traitement de 10 secondes dans un bain à métal d'apport chauffé.

4. Ruban adhésif selon l'une quelconque des revendications 1 à 3, dans lequel le polymère à cristaux liquides qui montre une anisotropie optique à l'état fondu est un polyester à cristaux liquides entièrement aromatique.

5. Ruban adhésif selon l'une quelconque des revendications 1 à 4, dans lequel l'énergie libre de surface du film comprenant un polymère à cristaux liquides qui montre une anisotropie optique à l'état fondu est supérieure à 35 dynes/cm.

6. Ruban adhésif selon l'une quelconque des revendications 1 à 5, dans lequel, dans le film comprenant un polymère à cristaux liquides qui montre une anisotropie optique à l'état fondu, la direction longitudinale est une direction de traction de la machine de moulage du film, et la direction coupant à angle droit celle-ci dans le plan du film est une direction de traction transversale du moulage de film.

7. Ruban adhésif selon l'une quelconque des revendications 1 à 6, dans lequel le polymère à cristaux liquides qui montre une anisotropie optique à l'état fondu est une composition de résine de polyester à cristaux liquides comprenant (A) un polyester à cristaux liquides comme phase continue et (B) un copolymère ayant un groupe fonctionnel réactif avec un polyester à cristaux liquides comme phase dispersée.

8. Ruban adhésif selon la revendication 7, dans lequel le polymère à cristaux liquides qui montre une anisotropie optique à l'état fondu est une composition pouvant être obtenue en malaxant à l'état fondu (A) 56,0 à 99,9 % en poids d'un polyester à cristaux liquides et (B) 44,0 à 0,1 % en poids d'un copolymère ayant un groupe fonctionnel réactif avec un polyester à cristaux liquides.

9. Ruban adhésif selon la revendication 7 ou 8, dans lequel le groupe fonctionnel réactif avec un polyester à cristaux liquides est un groupe époxy, un groupe oxazolyle ou un groupe amine.

10. Ruban adhésif selon l'une quelconque des revendications 7 à 9, dans lequel le copolymère ayant un groupe fonctionnel réactif avec un polyester à cristaux liquides (B) est un copolymère qui contient 0,1 à 30 % en poids d'une unité de carboxylate glycidylique insaturé et/ou d'une unité d'éther glycidylique insaturé.

11. Ruban adhésif selon l'une quelconque des revendications 7 à 9, dans lequel le copolymère ayant un groupe fonctionnel réactif avec un polyester à cristaux liquides (B) est un caoutchouc ayant un groupe époxy.

12. Ruban adhésif selon l'une quelconque des revendications 7 à 9, dans lequel le copolymère ayant un groupe fonctionnel réactif avec un polyester à cristaux liquides (B) est une résine thermoplastique ayant un groupe époxy.

13. Ruban adhésif selon l'une quelconque des revendications 7 à 12, dans lequel le polyester à cristaux liquides (A) peut être obtenu en faisant réagir de l'acide dicarboxylique aromatique, du diol aromatique et de l'acide hydroxycarboxylique aromatique.

14. Ruban adhésif selon l'une quelconque des revendications 7 à 12, dans lequel le polyester à cristaux liquides (A) peut être obtenu en mettant à réagir différents types d'acides hydroxycarboxyliques aromatiques.

15. Ruban adhésif selon l'une quelconque des revendications 1 à 14, dans lequel l'adhésif comprend un adhésif à base d'acryle comme composant principal.

16. Ruban adhésif selon l'une quelconque des revendications 1 à 14, dans lequel l'adhésif comprend un adhésif à base de silicone comme composant principal.

17. Ruban adhésif selon la revendication 15, dans lequel l'adhésif à base d'acryle est un copolymère.

18. Ruban adhésif selon l'une quelconque des revendications 1 à 17, dans lequel le film comprenant un polymère à cristaux liquides qui montre une anisotropie optique à l'état fondu est un film obtenu par un procédé de formation de film soufflé.
